# EUROPÄISCHE PATENTSCHRIFT

(11) **EP 0 621 437 B1**
(45) Veröffentlichungstag und Bekanntmachung des Hinweises auf die Patenterteilung: **07.01.1998**
(21) Anmeldenummer: 94105847.1
(22) Anmeldetag: 15.04.1994
(51) Int. Cl.: F17D 5/00

(54) **Vorschubschlauch für Rohrmolch**
Propulsion hose for a pig
Tuyau de propulsion pour un dispositif d'inspection des tubes

(30) Priorität: 21.04.1993 DE 4312942
(43) Veröffentlichungstag der Anmeldung: 26.10.1994
(73) Patentinhaber: ABB Reaktor GmbH, D-68167 Mannheim (DE)
(72) Erfinder: Knierriem, Leonhard, D-64711 Eberbach (DE); Haller, Hans, D-68169 Mannheim (DE)
(74) Vertreter: Rupprecht, Klaus, Dipl.-Ing.

(56) Entgegenhaltungen:
- EP-A- 0 333 450
- EP-A- 0 474 233
- WO-A-86/06784
- WO-A-87/06323
- BE-A- 406 211
- CA-A- 1 231 866
- DE-A- 2 330 844
- DE-U- 7 302 773
- HITACHI REVIEW, Bd.36, Nr.2, April 1987, TOKYO JP Seiten 79 - 84 HOSOHARA,FUJITA,MORI,KURITA,SAKAMOTO&NAITO 'Development of Inspection Robots for Small Pipe Lines'
- PATENT ABSTRACTS OF JAPAN vol. 10, no. 320 (M-530) (2376) 30. Oktober 1986 & JP-A-61 127 572 (AGENCY OF INDUSTRIAL SCIENCE & TECHNOLOGY) 14. Juni 1986

## Beschreibung

Die Erfindung betrifft eine Einrichtung zum Prüfen und/oder Bearbeiten einer Rohrleitung, insbesondere einer Rohrleitung mit mindestens einem Rohrbogen, von innen, wobei ein Inspektions- und/oder Werkzeugkopf durch einen Antrieb in der Rohrleitung bewegbar ist und wobei vom Inspektions- und/oder Werkzeugkopf ein nach außerhalb der Rohrleitung führender Versorgungsschlauch ausgeht.

Eine derartige Einrichtung ist aus ,,Hitachi Review Vol. 36 (1987), No. 2, Tokyo, Japan, Seiten 79 bis 84" bekannt. Dort wird als Versorgungsschlauch ein flexibles metallisches Rohr eingesetzt. Die als Roboter bezeichnete Einrichtung erfährt ihren Antrieb durch einen Antriebswagen, der im Kopfbereich des Roboters angeordnet ist. Da die Bauteile des Roboters den Versorgungsschlauch mit Abstand umfassen, ist ein Platzbedarf erforderlich, der den Einsatz der Einrichtung nur oberhalb eines bestimmten Rohrinnendurchmessers erlaubt.

Ferner ist aus der BE-A-406 211 ein Kabel bekannt, das zur Erleichterung des Einziehvorganges ringförmig ausgebildete Transportkörper aufweist, die zur Reduzierung von Reibungsverlusten mit von der Umfangsfläche der Tragkörper hervorstehenden Wälzkörpern bestückt sind.

Es stellt sich die Aufgabe, eine Einrichtung der eingangsgenannten Art anzugeben, die bei weiterhin geringen Reibungsverlusten den Platzbedarf im Durchmesserbereich reduziert.

Gelöst wird diese Aufgabe erfindungsgemäß dadurch, daß der Versorgungsschlauch aus einer Vielzahl von Tragkörpern und dieselben untereinander verbindenden Zwischenstücken gebildet ist und daß die Tragkörper und/oder die Zwischenstücke mit von ihrer Umfangsfläche hervorstehenden Wälzkörpern bestückt sind.

Ein Schleifen des Vorschubschlauches entlang der Rohrleitung wird weiterhin vermieden. Die Verwendung von einzelnen Tragkörpern und Zwischenstücken als Bauteile des Versorgungsschlauches gestattet eine schlangenförmige Bewegung des Vorschubschlauches bei reduziertem Durchmesser der Einrichtung.

Gemäß einer bevorzugten Ausgestaltung ist der Antrieb als außerhalb der Rohrleitung angeordnete Transporteinheit ausgebildet.

Durch diese Maßnahme erfolgt eine weitere Reduzierung der Reibungsverluste, da das Eigengewicht des Antriebes vom Inspektions- und/oder Werkzeugkopf nicht mehr getragen und mitgeschleppt werden muß.

Vorzugsweise ist auch der Inspektions- und/oder Werkzeugkopf mit Wälzkörpern bestückt.

Als Wälzkörper werden bevorzugt Rillenkugellager verwendet, die von quer zur Längsachse eines Tragkörpers erstreckten Bolzen gehalten sind.

Um einen möglichst großen Bereich der Rohrleitungsinnenwand mit Wälzkörpern kontakten zu können, ist die der Rohrleitungsinnenwand zugeordnete Umfangsfläche des Tragkörpers kugelförmig ausgebildet. Mit dieser Maßnahme wird ferner eine störungsfreie Bewegung des Versorgungsschlauches im Bereich von Rohrbögen gewährleistet.

Die Transporteinheit ist vorzugsweise an einer zugänglich gemachten Öffnung einer in der Rohrleitung eingebundenen Armatur angeflanscht.

Anhand eines Ausführungsbeispieles und der schematischen Zeichnungen Fig. 1 bis 5 wird die erfindungsgemäße Einrichtung beschrieben.

Dabei zeigt die
- Fig. 1: einen Längsschnitt durch eine Rohrleitung mit einer Einrichtung nach der Erfindung,
- Fig. 2: einen Teilbereich eines Rohrbogens mit einem aus Tragkörpern und Zwischenstücken gebildeten Versorgungsschlauchstück,
- Fig. 3: eine Seitenansicht eines Tragkörpers,
- Fig. 4: einen Schnitt entlang der Linie IV-IV der Fig. 3,
- Fig. 5: eine teilweise im Schnitt dargestellte Seitenansicht eines Tragkörpers mit darin angeordneten Wälzkörpern.

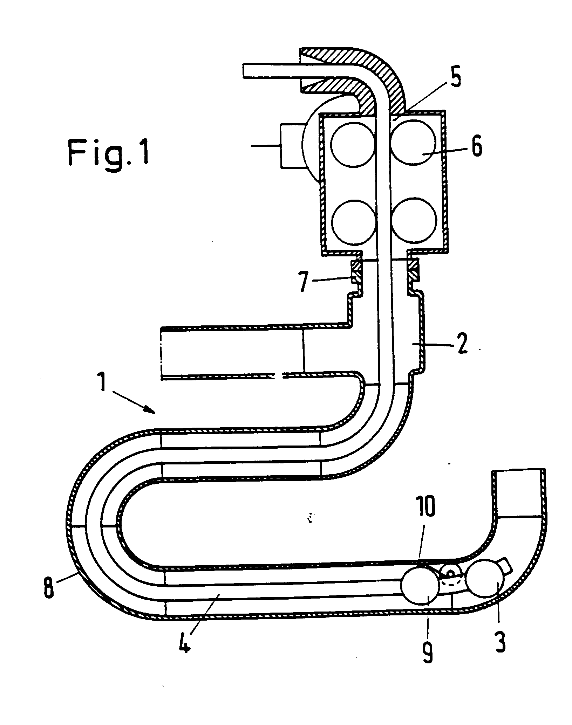

Die Figur 1 zeigt den Teilbereich einer von der Innenseite her zu prüfenden und/oder zu bearbeitenden Rohrleitung 1, in die eine Armatur 2 eingebunden ist. Ein Inspektions- und/oder Werkzeugkopf 3 wird über seinen Versorgungsschlauch 4 mit Hilfe eines in einer Transporteinheit 5 angeordneten Antriebes 6 entlang der Rohrleitungsinnenwand bewegt. Die Transporteinheit ist an einer zugänglich gemachten Öffnung 7 der Armatur 2 angeflanscht. Die Rohrleitung weist eine Vielzahl von Rohrbögen 8 auf, die jedoch für die vorliegende Einrichtung kein Hindernis darstellen.

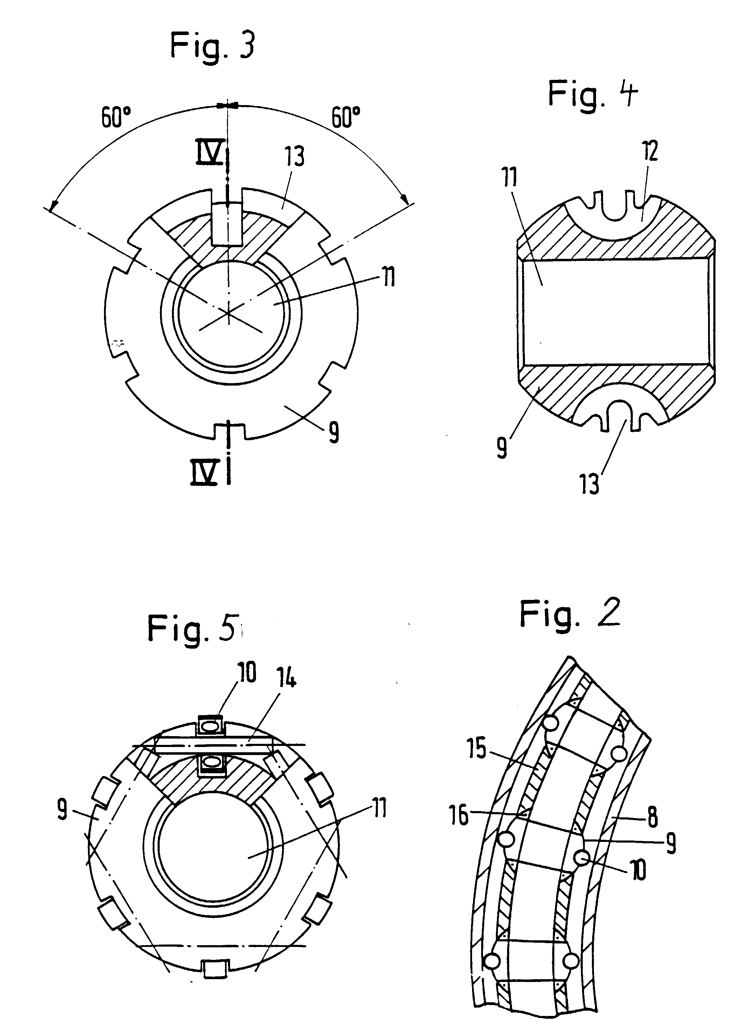

Wie in der in einem größeren Maßstab dargestellten Figur 2 für einen Rohrbogenbereich angedeutet, bilden die Tragkörper 9 zusammen mit Zwischenstücken 15 den Versorungsschlauch 4. Die Zwischenstücke sind als Büchsen ausgebildet, deren Innendurchmesser derjenigen der Bohrung 11 des Tragkörpers 9 entspricht und deren Außendurchmesser so klein gehalten ist, daß die Bewegung als Versorgungsschlauch nicht behindert ist. Stirnseitig sind die Zwischenstücke 15 über Gelenkbolzen 16 mit dem jeweils nebengeordneten Tragkörper 9 verbunden, so daß die schlangenartige Bewegung des aus Tragkörper und Zwischenstücken gebildeten Versorgungsschlauches gewährleistet ist. Gemäß einer nicht dargestellten Variante können die Tragkörper 9 und/oder die Zwischenstücke 15 gelenkig ausgebildet sein. Erforderlichenfalls sind auch die Zwischenstücke mit Wälzkörpern bestückbar.

Die Figuren 3 und 4 zeigen einen Tragkörper 9 in einem größeren Maßstab. Er ist ringförmig ausgebildet, übergreift mit seiner Bohrung 11 den Versorgungsschlauch 4 und ist relativ zum Versorgungsschlauch festgelegt. Seine der Rohrleitungswandung zugewandte Oberfläche ist kugelartig abgerundet. In einem Abstand von 60° zueinander und parallel zur Achsrichtung verlaufend sind Nuten 12 zur Aufnahme von als Rillenkugellager ausgebildeter Wälzkörper 10 in den Tragkörper eingebracht. Eine die Nuten senkrecnt zur ihrer Erstreckung durchlaufende Ringnut 13 dient zur Aufnahme von Bolzen 14 zum Abstützen der Rillenkugellager 10 (Figur 5). Die Bolzen sind durch nicht dargestellte Hilfsmittel in ihrer Lage gesichert.

Ist die Unterbringung einer Transporteinheit 5 nicht möglich, kann der Antrieb auch im Werkzeug und/oder Inspektionskopf integriert sein. Die reibungsmindernde Schlangenbewegung des Vorschubschlauches ist auch dann gewährleistet. In der Figur 1 sind die Tragkörper 9 nur im Bereich des Werkzeugkopfes 3 angedeutet, während im restlichen Verlauf des Versorgungsschlauches auf deren Darstellung verzichtet wurde.

## Patentansprüche

1. Einrichtung zum Prüfen und/oder Bearbeiten einer Rohrleitung (1), insbesondere einer Rohrleitung mit mindestens einem Rohrbogen (8), von innen, wobei ein Inspektions- und/oder Werkzeugkopf (3) durch einen Antrieb (6) in der Rohrleitung bewegbar ist und wobei vom Inspektions- und/oder Werkzeugkopf ein nach außerhalb der Rohrleitung führender Versorgungsschlauch (4) ausgeht, dadurch gekennzeichnet, daß der Versorgungsschlauch (4) aus einer Vielzahl von ringförmig ausgebildeten Tragkörpern (9) und dieselben untereinander verbindenden Zwischenstücken (15) gebildet ist, und daß die Tragkörper (9) und/oder die Zwischenstücke (15) mit von ihrer Umfangsfläche hervorstehenden Wälzkörpern (10) bestückt sind.

2. Einrichtung nach Anspruch 1, dadurch gekennzeichnet, daß der Antrieb eine außerhalb der Rohrleitung (1) angeordnete Transporteinheit (5) ist.

3. Einrichtung nach Anspruch 1 oder 2, dadurch gekennzeichnet, daß die den Antrieb (6) aufnehmende Transporteinheit (5) an einem Flansch einer in die Rohrleitung (1) eingebundenen Armatur (2) angeordnet ist.

4. Einrichtung nach Anspruch 1, dadurch gekennzeichnet, daß der Inspektions- und/oder Werkzeugkopf mit Wälzkörpern (10) bestückt ist.

5. Einrichtung nach Anspruch 1 oder 4, dadurch gekennzeichnet, daß die Wälzkörper (10) Rillenkugellager sind, die von quer zur Längsachse des Transportkörpers (9) erstreckten Bolzen (14) gehalten sind.

6. Einrichtung nach Anspruch 1, dadurch gekennzeichnet, daß die der Rohrleitungswand zugewandte Umfangsfläche des Tragkörpers (9) kugelförmig ausgebildet ist.

## Claims

1. Device for testing and/or working a pipeline (1), in particular a pipeline having at least one pipe bend (8), from the inside, an inspection and/or tool head (3) being movable in the pipeline by means of a drive (6), and a feed hose (4) starting from the inspection and/or tool head and leading out of the pipeline, characterized in that the feed hose (4) is formed from a multiplicity of supporting bodies (9) of annular design and intermediate pieces (15) connecting the supporting bodies (9) to one another, and in that the supporting bodies (9) and/or the intermediate pieces (15) are fitted with rolling elements (10) projecting from their peripheral surface.

2. Device according to Claim 1, characterized in that the drive is a transport unit (5) arranged outside the pipeline (1).

3. Device according to Claim 1 or 2, characterized in that the transport unit (5) accommodating the drive (6) is arranged on a flange of a fitting (2) incorporated in the pipeline (1).

4. Device according to Claim 1, characterized in that the inspection and/or tool head is fitted with rolling elements (10).

5. Device according to Claim 1 or 4, characterized in that the rolling elements (10) are deep-groove ball bearings which are held by pins (14) extending transversely to the longitudinal axis of the transport body (9).

6. Device according to Claim 1, characterized in that the peripheral surface of the supporting body (9) facing the pipeline wall is of spherical design.

## Revendications

1. Dispositif pour inspecter et/ou effectuer un travail à l'intérieur d'une conduite (1), notamment à l'intérieur d'une conduite comportant au moins un coude (8), un tête d'inspection et/ou porte-outil (3) pouvant être déplacée dans la conduite à l'aide d'un mécanisme moteur (6) et un tuyau flexible d'alimentation (4) qui mène à l'extérieur de la conduite partant de la tête d'inspection et/ou porte-outil, caractérisé par le fait que le tuyau flexible d'alimentation (4) est formé de plusieurs éléments porteurs (9) annulaires et d'éléments intermédiaires (15) qui relient les uns aux autres lesdits éléments porteurs et par le fait que les éléments porteurs (9) et les éléments intermédiaires (15) sont pourvus de corps roulants (10) formant saillies sur leur surface extérieure.

2. Dispositif selon la revendication 1, caractérisé par le fait que le mécanisme moteur est une unité de transport (5) qui est disposée à l'extérieur de la conduite (1).

3. Dispositif selon la revendication 1 ou 2, caractérisé par le fait que l'unité de transport (5) recevant le mécanisme moteur est montée sur une bride d'un élément de jonction (2) inséré dans la conduite (1).

4. Dispositif selon la revendication 1, caractérisé par le fait que la tête d'inspection et/ou porte-outil est équipée de corps roulants (10).

5. Dispositif selon la revendication 1 ou 4, caractérisé par le fait que les corps roulants (10) sont des roulements rainurés à billes qui sont supportés par des axes (14) s'étendant perpendiculairement à l'axe longitudinal de l'élément porteur (9).

6. Dispositif selon la revendication 1, caractérisé par le fait que la surface extérieure de l'élément porteur (9) tournée vers la paroi de la conduite est sphérique.
